# EUROPEAN PATENT APPLICATION

(11) **EP 0 980 123 A2**
(43) Date of publication of application: **16.02.2000**
(21) Application number: 99113666.4
(22) Date of filing: 15.07.1999
(51) Int. Cl.: H01S 3/067, H01S 3/23, H01S 3/10

(54) **High average power fiber laser system with phase front control**

(30) Priority: 11.08.1998 US 132178
(71) Applicant: TRW Inc., Redondo Beach, California 90278 (US)
(72) Inventor: Komine, Hiroshi, Torrance, CA 90505 (US)
(74) Representative: Schmidt, Steffen J., Dipl.-Ing.

(57) **Abstract**

A relatively high average power fiber laser system with phase control. The laser system includes a phased array of parallel fiber amplifiers coupled to a common master oscillator. An important aspect of the invention relates to the independently adjustable optical phase modulators for each of the fiber amplifiers. Various methods for phase modulation are contemplated, such as fast spatial light modulators (SLM) as well as in-line fiber phase modulators. Both types of phase modulation utilize a wavefront sensor for deriving feedback signals for phase control. Arbitrary phase profile information can be applied to the phase modulators to synthesize a desired output beam. Thus, the phase controlled fiber amplifier array functions as a synthetic aperture transmitter at optical frequencies. When combined with a beacon phase front sensor for atmospheric beam propagation, the phase modulator can encode phase conjugate information to compensate for atmospheric aberrations. Relative to other high power laser systems, the laser system in accordance with the present invention has lower power supply demand and cooling requirements which results in lower weight, volume and cost. The use of the fiber laser system in accordance with the present invention also permits greater flexibility in packaging with fewer discrete optics and a relatively simpler optical system design and well as being amenable to mass production.

## Description

### BACKGROUND OF THE INVENTION

### 1. Field of the Invention

The present invention relates to a high-average-power fiber laser system which utilizes a phased array of amplifiers coupled to a common master oscillator which incorporates independent phase control of each fiber amplifier.

### 2. Description of the Prior Art

High power laser weapon systems are generally known in the art. An example of such a high power laser system is disclosed in commonly owned U.S. Patent No. 5,198,607. Such laser weapon systems normally include a high power laser weapon and a tracking system for locking the high power laser on a target, such as a ballistic missile, cruise missile, bomber or the like. Such laser weapons are used to destroy or "kill" such targets.

Such laser weapon systems are known to employ relatively large chemical lasers. However, such chemical lasers have several drawbacks. For example, such chemical lasers are relatively bulky and require special fuels that create logistic difficulties for field deployment. As such, a need has developed to provide relatively efficient compact laser weapons that can operate from electrical generators. Unfortunately, the power output level of known fiber laser systems, which are relatively compact and efficient is heretofore been insufficient for use in laser weapon systems. Such fiber lasers are known to include a dual-clad optical fiber. More particularly, the optical fiber includes a core, for example formed from SiO₂ and doped with a rare earth ion, such as, Yb or Nd, Er or other rare earth ions. The doped core is clad by two different cladding layers having different indices of refraction to cause the total internal reflection of the light within the optic fiber to form a single mode fiber. Examples of such optical fibers used for fiber laser are disclosed in U.S. Patent Nos. 4,815,079; 5,087,108; 5,218,665; 5,291,501; 5,461,692; 5,530,709; and 5,566,196. Such fiber lasers are known to be diode pumped and generate relatively low average power levels, for example, up to 35 watts at a light-to-light efficiency of about 70%. Unfortunately, such relatively low power levels of fiber lasers have made them unsuitable for many applications including defense applications.

Various attempts have been to increase the average power output of such fiber lasers. Examples of such attempts are disclosed in U.S. Patent Nos. 5,121,460 and 5,373,576. Such attempts generally involve the use of relatively complex optical fibers. For example, the '460 patent teaches the use of an optical fiber having a neodymium doped primary core surrounded by a first elliptically shaped multi-mode cladding of fused silica. A samarium doped secondary core is formed around the primary core within the first layer of cladding. The secondary core is utilized for suppressing higher order modes.

The '576 patent also discloses the use of a relatively high average power optical fiber. More particularly, the '576 patent discloses an optical fiber formed, with a doped core surrounded by a first multi-mode cladding layer formed from, for example, fused silica. A second cladding layer is formed around the first cladding layer and formed from a cross-link polymeric material having a liquid component, The optical fibers disclosed in the '460 and '576 patents are relatively complex. Thus, there is a need for a relatively high average power fiber laser that utilizes relatively less complex optical fibers than known systems.

### SUMMARY OF THE INVENTION

Briefly, the present invention relates to a relatively high average power fiber laser system with phase control. The laser system includes a phased array of parallel fiber amplifiers coupled to a common master oscillator. An important aspect of the invention relates to the independently adjustable optical phase modulators for each of the fiber amplifiers. Hence, the fiber amplifier array operates as a synthetic aperture transmitter at optical wavelengths. Various methods for phase modulation are contemplated, such as fast spatial light modulators (SLM) as well as in-line fiber phase modulators. Both types of phase modulation utilize a wavefront sensor for deriving feedback signals for phase control. When combined with a beacon phase front sensor for atmospheric beam propagation, the phase modulator can encode phase conjugate information to compensate for atmospheric aberrations. Relative to other high power laser systems, the laser system in accordance with the present invention has a lower power supply demand and cooling requirements which results in lower weight, volume and cost. The use of the fiber laser system in accordance with the present invention also permits greater flexibility in packaging with fewer discrete optics and a relatively simpler optical system design and well as being amenable to mass production.

### DESCRIPTION OF THE DRAWINGS

These and other advantages of the present invention will be readily understood with reference to the following specification and attached drawing wherein:

FIG. 1 is a block diagram of the high average power laser system in accordance with the present invention.

FIG. 2 is a more detailed block diagram of the high average power laser system in FIG. 1 illustrating an exemplary wavefront sensor.

### DETAILED DESCRIPTION

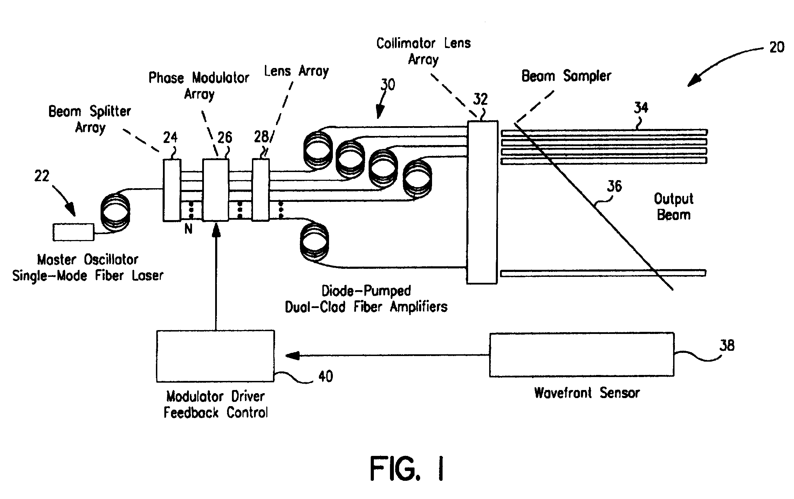

The present invention relates to a high average power fiber laser system as illustrated in FIG. 1 and generally identified with the reference numeral 20. Known diode pumped, dual clad, ytterbium-doped glass fiber lasers are known to generate up to 35 watts of power in a single mode fiber at a light-to-light efficiency of about 70%. In order to provide relatively higher average power, the system 20 in accordance with the present invention utilizes a plurality of parallel fiber amplifiers, for example, diode pumped dual clad fiber amplifiers connected to a common master oscillator. The dual clad fiber amplifiers with single-mode cores can generate diffraction-limited beam output. Fibers of slightly different length can lead to differences in the optical phase of the output beam. An array of such beams produce poor beam quality. This problem is solved by providing each amplifier with independently controlled adjustable phase modulators. These phase modulators are used to compensate for the relative optical phase shifts among the array of fiber amplifiers. The phase modulators may be disposed on the input side of the fiber amplifiers to provide precompensation of the phase shifts due to the fiber amplifiers. This array of radiation emitted by the fiber amplifiers with individual phase modulators is analogous to a synthetic aperture radar operating at radio and microwave frequencies. The present invention operates in the optical frequencies.

Turning to FIG. 1, a high average power fiber laser system 20 includes a master oscillator 22, formed, for example, from a single mode fiber laser, for example, a Model PYL Series single-mode laser, by the IRE-POLUS GROUP. The master oscillator 22 provides a primary laser signal. The primary laser light from the master oscillator 22 is directed to beam splitter array 24. The beam splitter array 24 may consist of a plurality of fiber beam splitters, which divides the primary laser signal from the master oscillator 22 into a plurality of secondary laser signals, for example, N secondary laser signals as shown. The number of beam splitters in the beam splitter array 24 is dependent upon the number of dual clad fiber amplifiers in the system. An important aspect of the invention, is that the number of fiber amplifiers can be varied to provide a scaled laser output beam.

The secondary laser signals from the beam splitter array 24 are directed to a phase modulator array 26. As mentioned above, the phase modulator array provides for precompensation of the secondary laser signals to compensate for the relative optical phase shifts in fiber amplifiers. As will be discussed in more detail below, various methods are suitable for use as the phase modulator array 26 including fast spatial light modulators (SLM) as well in-line fiber phase modulators.

An important aspect of the invention is the use of diode pumped dual-clad single-mode fiber amplifiers 30. Such dual-clad single-mode fiber amplifiers are known to provide significantly higher output power with single-mode output compared to conventional single-mode fibers. The pumped inner cladding region in such dual-clad fibers can be made relatively larger than the single mode core to facilitate greater pump power coupling at the ends of the fiber.

The precompensated secondary laser signals from the phase modulator array 26 may be collimated by a lens array 28. The lens array 28 consists ofN parallel lenses used for collimating the precompensated secondary laser signals from the phase modulator array 26 into a plurality ofN fiber amplifiers 30. Each fiber amplifier 30 is associated with a lens from the lens array 28, an individually adjustable phase modulator from the phase modulator array 26 for controlling the optical phase of an individual secondary laser beam from the beam splitter array 24. The lens array 24 and a collimator lens array 32 discussed below are optics in which small, identical lenses are fabricated on a transparent substrate, arranged in rows and columns of a precisely aligned, two-dimensional grid. Such optics are commercially available, for example, from Micro-Electro-Mechanical Systems, Huntsville, AL and Meadowlark Optics, Longmont, CO.

Due to the precompensation of the phase modulator array 26, output signals from the individual fiber amplifiers 30 provide a relatively undistorted wave front. These output signals from the fiber amplifiers 30 may be collimated by a collimator lens array 32 to provide a relatively high average power output beam 34.

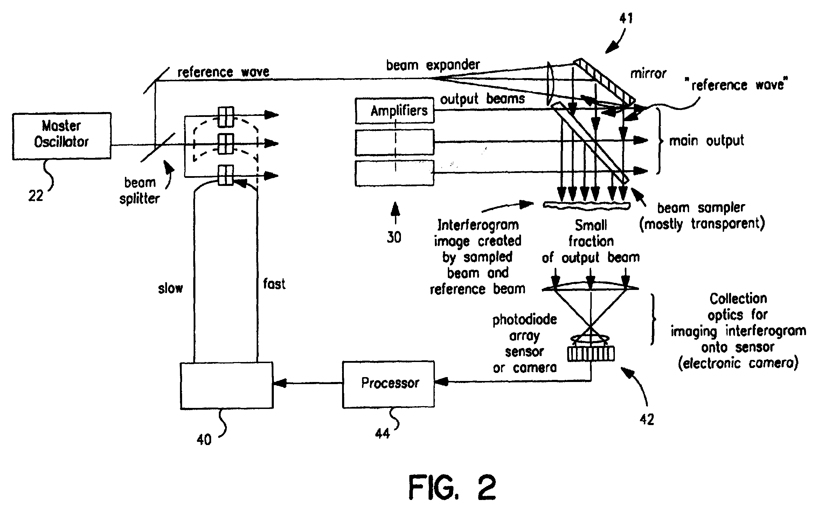

The output beam 34 is directed to a beam sampler 36 which reflects a portion of the output beam 32 to a wavefront sensor 38. The wavefront sensor 38 forms a closed feedback loop with a modulator driver feedback control unit 40 and the phase modulator array 26. As mentioned above, the phase modulator array may utilize a fast spatial light modulator (SLM). Spatial light modulators are known in the art. Example of such spatial light modulators is commercially available, for example, from Meadowlark Optics, Longmont, Co. Such SLMs are made up of a two dimensional array of individually addressable elements or pixels to control the optical phase of each corresponding fiber amplifier 30. The pixels in each of the SLMs forming the phase modulator array 26 are modulated as a function of the wavefront of the output beam 34 to create a conjugate phase front. More particularly, as illustrated in FIG. 2 an exemplary wavefront sensor 38 is illustrated. The wavefront sensor 38 may consist of Mach-Zehnder interferometer 41 in which a small portion of the master oscillator output, as generally illustrated in FIG. 2, provides a reference signal. By sampling a small fraction of the output beam and interfering it with the reference signal, the resulting interferogram image converts the phase errors into intensity variations that can be observed and recorded by an electronic photo-diode array or a camera 42 and an electronic image capture device (i.e. processor 44 with frame grabber processing structure which is well known in the art. For example, such a product is commercially available from Imaging Technology, Inc., Waltham, MA. The resulting phase error magnitude information is represented by image brightness at each position of the sample beam that contains the wavefront data. The first image is stored in the processor memory, and a second image is obtained immediately after the first image but with the reference beam modulated by a quarter wave phase shift. The brightness values from the two images uniquely determine the phase of the signal wave to within modulo 2π. The modulator driver feedback control unit 40 may consist of a computer which uses the wavefront data from the wavefront sensor 38 to generate a conjugate of the wavefront for each pixel in each amplifier path. The conjugate phase information is then converted to electrical signals to drive the spatial light modulators.

As mentioned above, the phase modulator array 26 may be formed from slow liquid crystal spatial light modulators (SLMs) which are formed with an array of phase shifters with a relatively wide dynamic range (several waves) but with a slow response (seconds) to compensate for relative optical path differences among the fiber amplifiers 30. In order to compensate for atmospheric aberrations, a beacon phase front sensor may also be provided. This sensor is similar to the wavefront sensor, but needs to acquire and process images much faster (> 1 KHz) because of air turbulence. The atmospheric aberrations may be compensated by incorporating fast liquid crystal SLMs into the phase modulator array 26 and optimizing the fast SLMs for a smaller range (one wave) but much faster response (< 1 millisecond). Alternative means to achieve fast phase modulation include piezo fiber modulators commercially available for example, from Canadian Instrumentation & Research Ltd., Canada and electro-optic crystal modulators, commercial products be available from Uniphase Electro-Optics Products Division, San Jose, CA. Both of these materials can also serve as phase modulators for single-mode fibers. These fast and slow components of the wavefront data may be separated in the processor 44 to drive the respective parts of the modulator driver feedback control unit 40.

The system 20 illustrated in FIG. 1 forms a high average power fiber laser system with wavefront compensation. In addition to being compact and efficient, the high average power fiber laser system 20 provides a scalable power output with phase front control, useful in applications where the power level requirements vary and where beam aberrations correction enhances the system performance.

Obviously, many modifications and variations of the present invention are possible in light of the above teachings. Thus, it is to be understood that, within the scope of the appended claims, the invention may be practiced otherwise than as specifically described above.

What is claimed and desired to be covered by a Letters Patent is as follows:

## Claims

1. A high average power fiber laser system comprising:
a master oscillator for generating a primary laser signal;
a beam splitter array for splitting said primary laser signal into N secondary laser signals;
a phase modulator array for providing phase compensation of said N secondary laser signals;
N single-mode dual clad fiber amplifiers for amplifying said N secondary laser signals and generating an output beam;
a beam sampler for sampling said output beam, defining sampled signals; and
means responsive to said sampled signals for providing a feedback signal to said phase modulator array to provide phase compensation of said secondary laser signals.

2. The high average power laser system as recited in claim 1, wherein said phase modulator array includes N liquid crystal spatial light modulator (SLMs) for providing individual phase control of each of said N secondary laser signals.

3. The high average power laser system as recited in claim 2, wherein said phase modulator array includes slow liquid crystal SLMs for providing relative optical phase shift correction of said amplifiers.

4. The high average power laser system as recited in claim 3, wherein said phase modulator array further includes fast liquid crystal SLMs for providing compensation for atmospheric aberrations.

5. The high average power laser system as recited in claim 2, wherein said phase modulator array is disposed upstream of said amplifiers.

6. The high average power laser system as recited in claim 1, wherein said master oscillator includes a single mode fiber laser.

7. The high average power laser system as recited in claim 1, further including a first lens array for collimating said secondary laser beams applied to said dual clad single-mode fiber amplifiers.

8. The high average power laser system as recited in claim 7, further including a second lens array for collimating said secondary laser signals prior to being applied to said N amplifier.

9. The high average power laser system as recited in claim 8, further including a second lens array for collimating said output signals from said N amplifiers.

10. The high average power laser system as recited in claim 1, wherein said phase modulator array includes N fiber piezo-modulators.

11. The high average power laser system as recited in claim 1, wherein said phase modulator array includes N electro-optic modulators.

12. The high average power fiber laser system comprising:
a master oscillator for generating a primary laser signal;
a beam splitter for splitting said primary laser signal into N secondary laser signals;
a phased array of parallel fiber amplifiers coupled to said master oscillator; and
means for compensating for phase distortion resulting from said parallel fiber amplifiers.

13. The high average power laser system as recited in claim 12, wherein said compensating means includes means for sampling said output beams, defining sampled signals.

14. The high average power laser system as recited in claim 13, wherein said compensating means further includes a phase modulator array which is responsive to said sampled signals.

15. The high average power laser system as recited in clam 14, wherein said phase modulator array includes spatial modulators.

16. The high average power laser system as recited in claim 14, wherein said phase modulator array includes fiber piezo-modulators.

17. The high average power laser system as recited in claim 14, wherein said phase modulator array includes electro-optic modulators.

18. A method for compensating for phase compensation of an optical signal from a fiber optic system, the method comprising the steps of:
(a) splitting the optical signal into a plurality of secondary laser signals; and
(b) providing phase compensation of each of said secondary laser signals; and
(c) generating an output beam.

19. The method as recited in claim 18, further including the step of sampling said output beam.

20. The method as recited in claim 19, wherein said phase compensation is provided as a function of said sampled output beams.
